# EUROPEAN PATENT APPLICATION

(11) **EP 2 662 560 A2**
(43) Date of publication of application: **13.11.2013**
(21) Application number: 12192745.3
(22) Date of filing: 15.11.2012
(51) Int. Cl.: F03D 3/04

(54) **Omni-directional wind power harnessing device**

(30) Priority: 07.05.2012 TW 101116143
(71) Applicant: Chio, Chuy-Nan, 105 Taipei City (TW)
(72) Inventor: Chio, Chuy-Nan, 105 Taipei City (TW)
(74) Representative: Viering, Jentschura & Partner

(57) **Abstract**

An omni-directional wind power harnessing device is disclosed. The device of the present invention includes a platform, a rotary mechanism and an output shaft. The platform has a plurality of channeling ducts, which are circumferentially provided around the platform. Therefore, wind blowing in any direction may be channeled into the platform. Each of the vanes has an arc shape and the vanes are circumferentially provided around the rotary mechanism with a tilted angle to prompt the rotary mechanism to rotate.

## Description

### Background of the invention

### 1. Field of the invention

The invention generally relates to a wind power harnessing device. More particularly, the invention relates to an omni-directional wind power harnessing device that can harness the wind coming from any direction, and hence, may be used to reach the goal of attaining high efficiency in the conversion from wind power to electricity. In addition, several wind intercepting pieces are provided on each of the vanes to generate a stronger and lasting push, so as to enable the vanes to continue to rotate when the wind momentarily dwindles or stops.

### 2. Description of the prior art

In the wind power harnessing device of the prior art, the design of the vanes and the effects of changes in the direction of wind make its efficiency in the conversion from wind power to mechanical energy quite low. Moreover, the energy loss in the conversion from mechanical energy to electric energy further lowers its efficiency. Therefore, to harness the wind power, larger wind power harnessing devices are needed and as a result, the cost skyrockets; in addition, assembly, disassembly and repair become more difficult.

To improve the wind power harnessing device of the prior art, the inventor of the present invention previously developed "a multiple-story tower comprising vertical-axis wind turbines with wind direction tracking vanes and vertical vanes" (ROC patent no. 099,100,758), as illustrated in Figs. 7 and 8. The tower includes several conventional wind power harnessing units 5.

Each of the wind power harnessing units 5 includes several wind direction tracking vanes 51, which are always perpendicular to the wind direction to optimally harness the wind power. A slanted slit 52 is provided between each pair of the vanes to reduce the wind resistance. In addition, several vertical vanes 53 are provided at an outer portion of the arm of each unit to generate additional push. Therefore, the highest efficiency in the conversion from wind power to mechanical energy may be achieved. Moreover, several units are stacked up and fitted to a multiple-story tower so as to optimally use a limited amount of land.

However, such wind turbines are difficult to fabricate and repair and are more costly because of the complex structure of the tracking device for the vanes 51, vertical vanes 53 and flywheels 55. Therefore, these wind turbines need to be improved. Furthermore, several walls 56 need to be provided on the tower 54 to better harness the wind power; this complicates the structure of the tower and causes an increase in the fabrication cost of the tower.

To increase the efficiency in the conversion from wind power to mechanical energy, the vanes are moved to track the wind direction. However, the drawback is a more complex structure and higher fabrication cost, as well making the wind turbines more likely to malfunction and be damaged. In addition, in such wind turbines, additional safety and protective designs need to be provided. The upshot is the cost of wind turbines remains high.

To eliminate these disadvantages, the inventor of the present invention has put a lot of effort into the subject and has successfully come up with the omni-directional wind power harnessing device of the present invention.

### Summary of the invention

The main object of the present invention is to provide a wind power harnessing device that can optimally harness the power of the wind coming from any direction, and hence, may be used to reach the goal of attaining high efficiency in the conversion from wind power to electricity.

A second object of the present invention is to provide a wind power harnessing device in which a plurality of vanes are fixed and do not need to be moved around to track the directions of wind. Therefore, the device of the present invention is structurally simple, durable and less costly.

A third object of the present invention is to provide a wind power harnessing device that can utilize wind coming from any direction and utilize the associated turbulences and also can continue to operate when the wind momentarily dwindles or stops.

A fourth object of the present invention is to provide a wind power harnessing device in which several sets (with each set comprising several of the devices) may be fitted to a tower with each story holding a set of the devices. Therefore, such a tower is structurally simple and easy to manufacture.

To reach the objects, the wind power harnessing device of the present invention is disclosed. The wind power harnessing device of the present invention comprises a platform, a rotary mechanism and an output shaft. The platform has a plurality of channeling ducts, which are circumferentially provided around the platform. Therefore, wind coming in any direction may be channeled into the platform. Each of the vanes has an arc shape and the vanes are circumferentially provided around the rotary mechanism with a tilted angle. Several wind intercepting pieces are provided on each of the vanes to generate a stronger and lasting push, so as to enable the vanes to continue to rotate when the wind momentarily dwindles or stops.

### Brief description of the drawings

Fig. 1 is a perspective view of the omni-directional wind power harnessing device of the present invention.
Fig. 2 is a front view of the wind power harnessing device of the present invention.
Fig. 3 is a perspective view of the wind power harnessing device of the present invention with the top cover removed.
Fig. 4A is a cutaway view of the wind power harnessing device of the present invention with the top cover removed.
Fig. 4B is a cutaway view of the wind power harnessing device of the present invention to illustrate the relative spatial relationship between the platform and the rotary mechanism.
Fig. 5 is a view illustrating how the wind power is harnessed by the wind power harnessing device the present invention.
Fig. 6 is a perspective view illustrating how several devices of the present invention are fitted to a multiple-story tower.

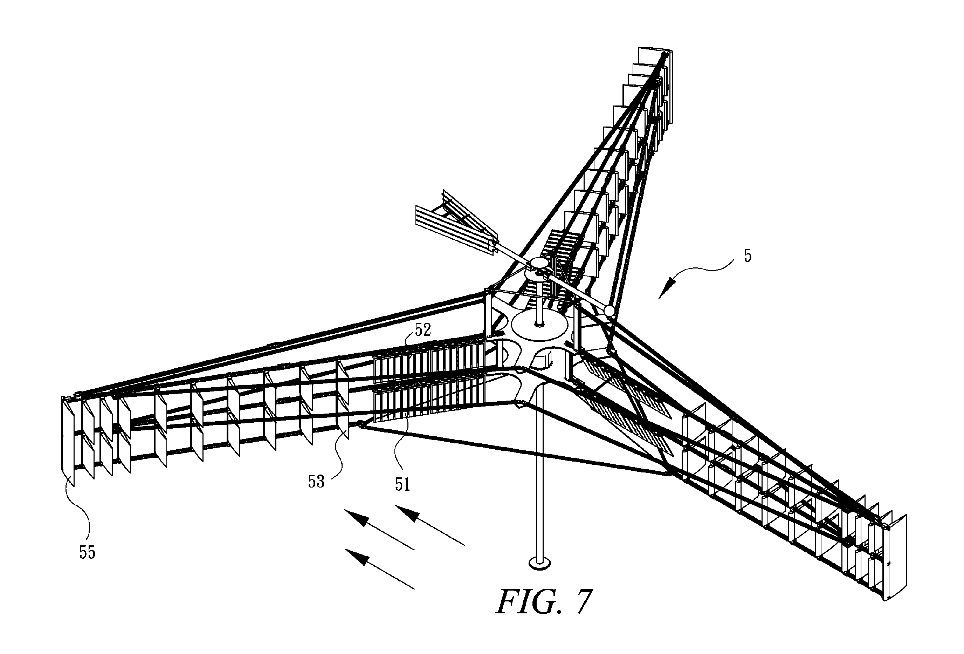

Fig. 7 is a perspective view of a wind turbine of the inventor's previous invention.

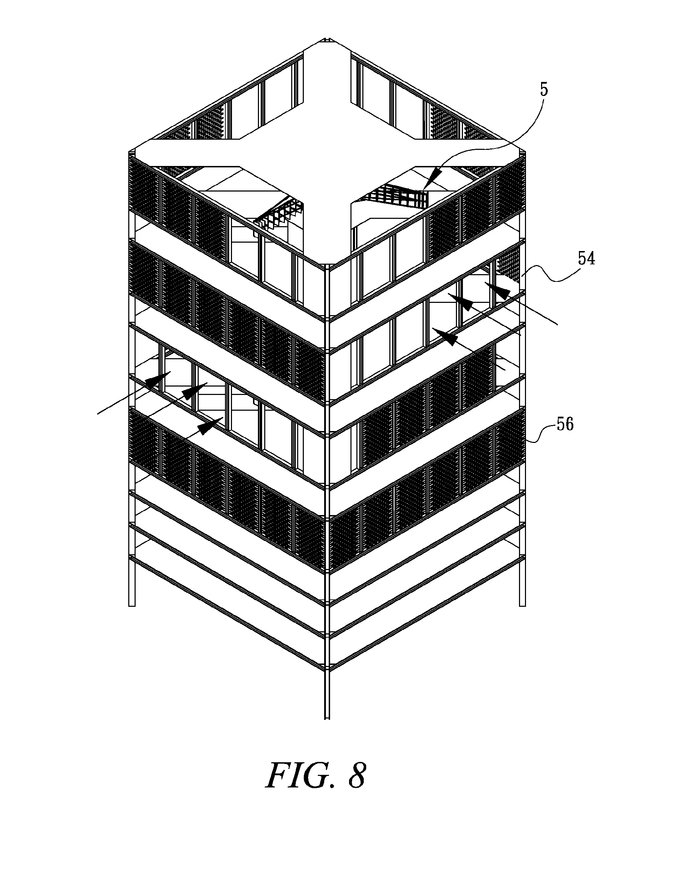

Fig. 8 is a perspective view illustrating how several of the wind turbines of the inventor's previous invention are fitted to a multiple-story tower.

### List of reference numerals

| | |
|---|---|
| 10 Wind power harnessing device | 1 Platform |
| 11 Channeling ducts | 2 Rotary mechanism |
| 21 Vanes | 22 Wind intercepting pieces |
| 23 Pressure enhancement region | 24 Wind outlet portion |
| 3 Output shaft | 4 Tower |
| 41 Space used or reserved for generators or maintenance | 5 Wind power harnessing devices of the inventor's previous invention |
| 51 Vanes | 52 Slanted slits |
| 53 Vertical vanes | 54 Multiple-story tower |
| 55 Flywheels | 56 Walls |
| F Main wind | Fs Subsequent wind |
| Fx Excessive or undesirable wind | |

### Detailed description of the preferred embodiment

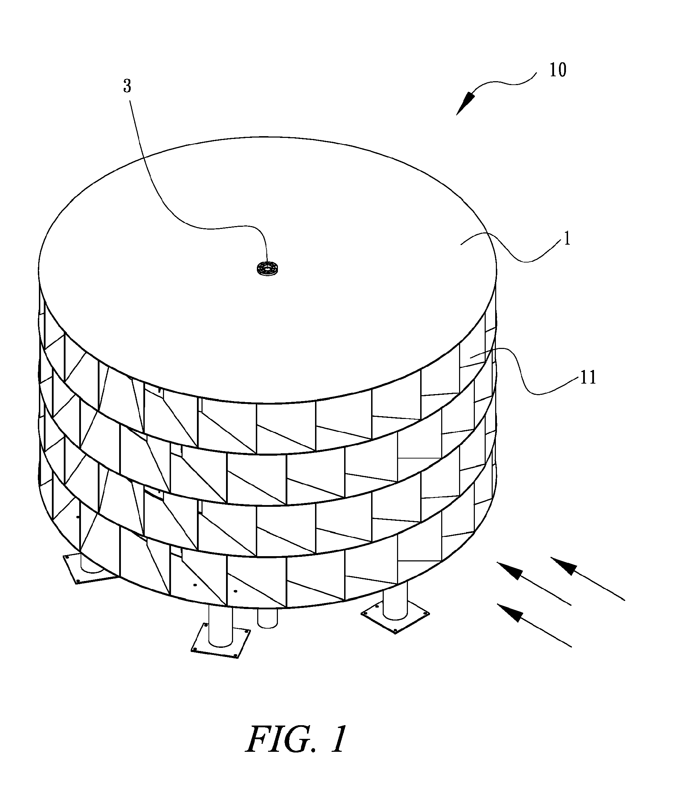

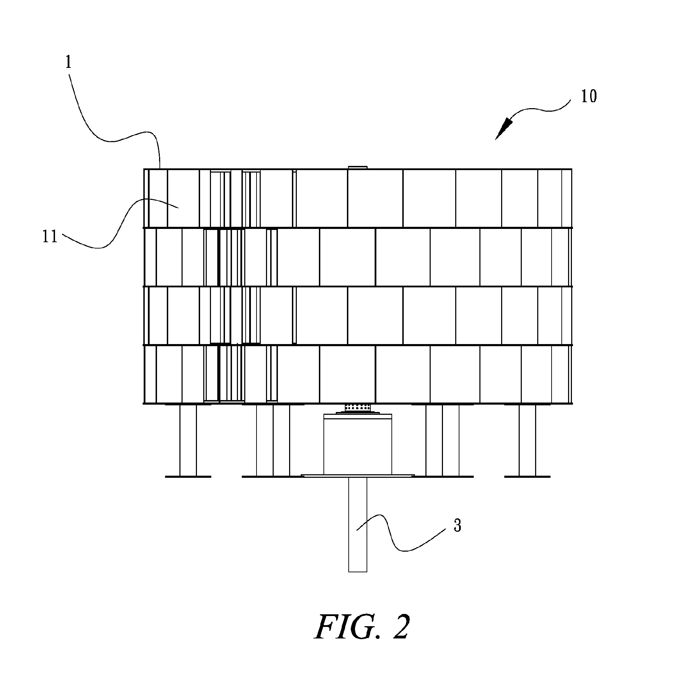

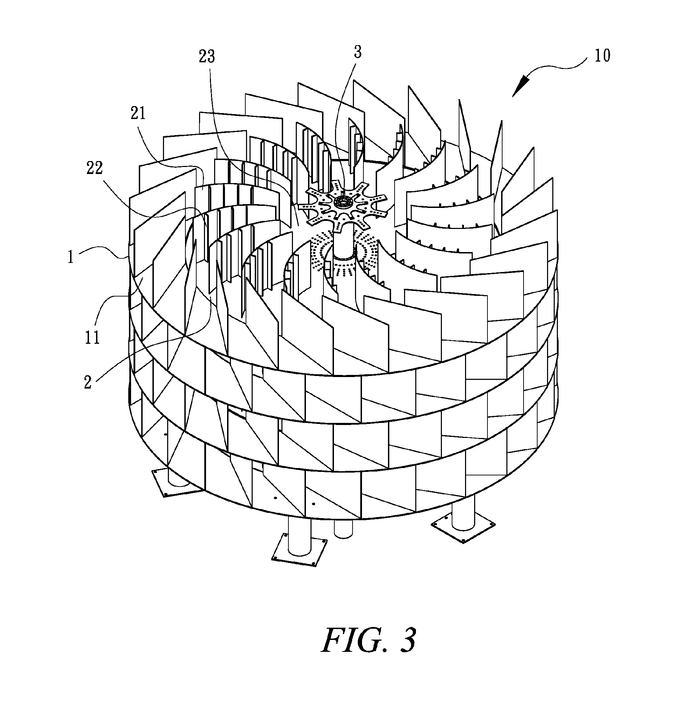

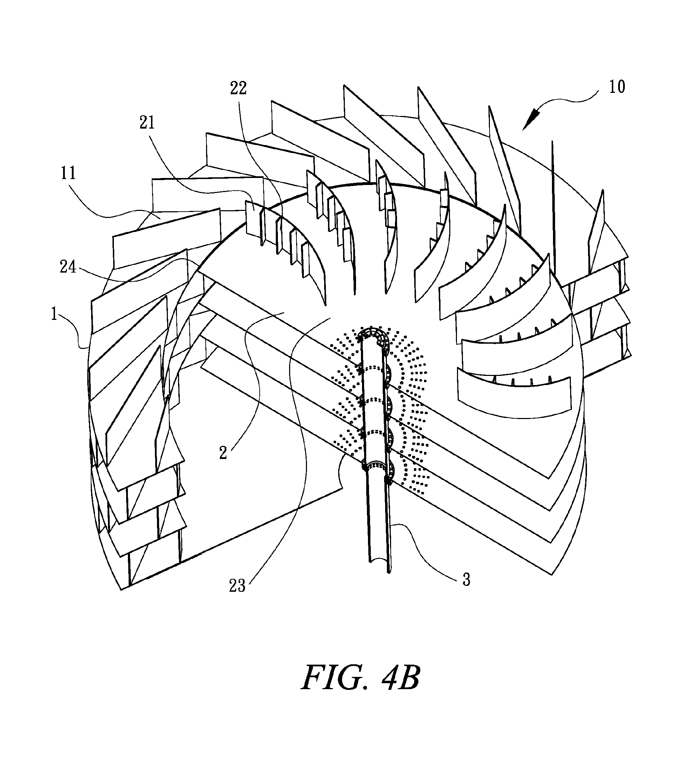

Please see Figs. 1 to 4B, which illustrate the omni-directional wind power harnessing device of the present invention. The device of the present invention may be used to harness the wind coming from any direction and to reach a higher efficiency in the conversion from wind power to mechanical energy. In addition, the device (10) of the present invention may continue to rotate when the wind momentarily dwindles or stops. The wind power harnessing device (10) of the present invention comprises a platform 1, a rotary mechanism 2 and an output shaft 3.

The platform 1 has a plurality of channeling ducts 11, which are circumferentially provided around the platform 1. Therefore, wind coming from any direction may be channeled into the platform 1. The rotary mechanism 2 is provided in the inner side of the platform 1 and comprises a plurality of vanes 21, which may be rotated by the wind channeled from the channeling ducts 11. A plurality of wind intercepting pieces 22 are provided on each of the vanes 21 to generate a stronger and lasting push, so as to enable the vanes 21 to continue to rotate when the wind momentarily dwindles or stops. The output shaft 3 is centrally disposed inside the rotary mechanism 2 and may be rotated by the rotary mechanism 2.

In addition, the platform 1 is circumferentially provided around the rotary mechanism 2, and the channeling ducts 11 are circumferentially provided around the platform 1. Each of the channeling ducts 11 is tilted to match the tilted angle of the corresponding vane 21. Each of the vanes 21 has an arc shape, and the vanes are circumferentially provided around the rotary mechanism 2 at a tilted angle. Several wind intercepting pieces 22 are provided on each of the vanes 21 to generate a stronger and lasting push, so as to enable the vanes 21 to continue to rotate when the wind momentarily dwindles or stops.

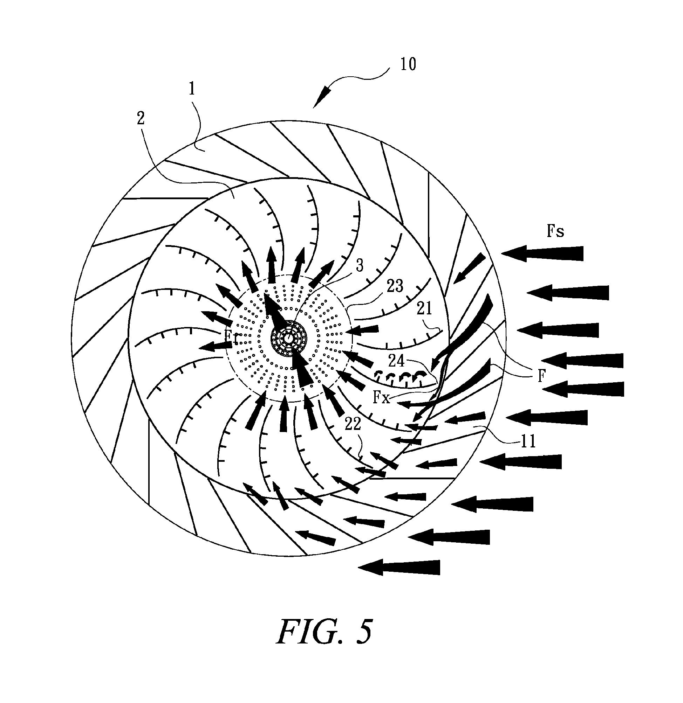

Now, please see Fig. 5, which illustrates how the energy of wind is harnessed by the wind power harnessing device the present invention. First, a main wind F is channeled by the channeling ducts 11 into the rotary mechanism 2. Then the rotary mechanism 2 and output shaft 3 start to rotate via the vanes 21. Next, the rotary motion of the output shaft 3 is passed on to an electricity generator or other mechanical device (not shown in the drawings) to harness the rotary motion. After the vanes 21 starts to rotate, a subsequent wind Fs, continues to enter the rotary mechanism 2 and pushes the main wind F inwards. With the presence of the wind intercepting pieces 22 and the subsequent wind Fs, the main wind F would be concentrated to generate a wind pressure and a stronger and lasting push.

Moreover, a pressure enhancement region 23 is provided at an inner portion of the rotary mechanism 2. If the subsequent wind Fs is sufficiently strong and lasting, F would prompt the vanes 21 to rotate; after F leaves the vanes 21, F would enter the pressure enhancement region 23 and then would be concentrated to generate another wind pressure. Then F would exert another push on the vanes 21. Therefore, by this functioning of the pressure enhancement region 23, most of the vanes 21 may be rotated by the main wind F and the efficiency is thus increased.

Also, a wind outlet portion 24 is provided between each of the vanes 21 and the corresponding channeling duct 11. An angle is formed between each vane 21 and the corresponding channeling duct 11. If the main wind F is sufficiently strong and concentrated, a turbulence may be generated and then hinder the rotation of the vanes 21. The wind outlet portions 24 can guide the direction of propagation of the main wind F and let out the excessive or undesirable wind Fx. Fx can recombine with the main wind F, which may not be sufficient strong, to become a stronger wind so as to continue to cause the vanes to rotate.

Because the wind power dwindles as it advances inwards along the vanes of the rotary mechanism, the wind intercepting pieces 22 may have a tapering length from the outside to the inside; in other words, the innermost wind intercepting piece has the smallest height, so as to generate a smaller amount of interception as the wind power dwindles as it advances inwards along the vanes of the rotary mechanism. The wind may thus be concentrated to generate another wind pressure to cause the vanes 21 to rotate. Each of the wind intercepting pieces 22 may have an increased or a reduced weight by the increase or reduction in its size or by the use of a different material to act as a flywheel to increase its rotational inertia thereby enabling the rotary mechanism to continue to rotate as the wind momentarily stops.

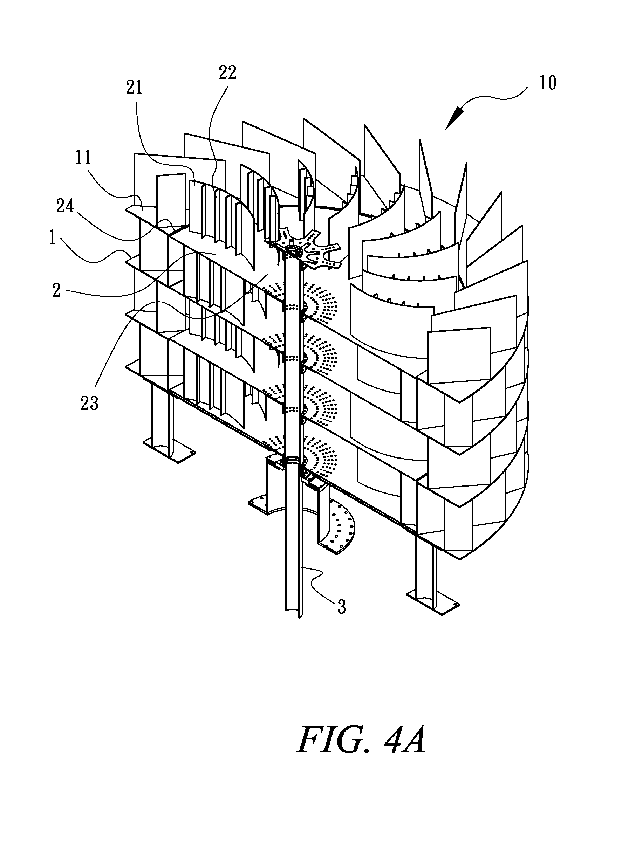

Please refer again to Figs. 1 to 5. In an embodiment of the present invention, four devices of the present invention are stacked up together with an angle between each neighboring pair of these four devices to form a set, so as to optimize the wind power harnessing effect. In addition, the number of the channeling ducts may be adjusted to be optimal. In this manner, the wind power may be optimally harnessed.

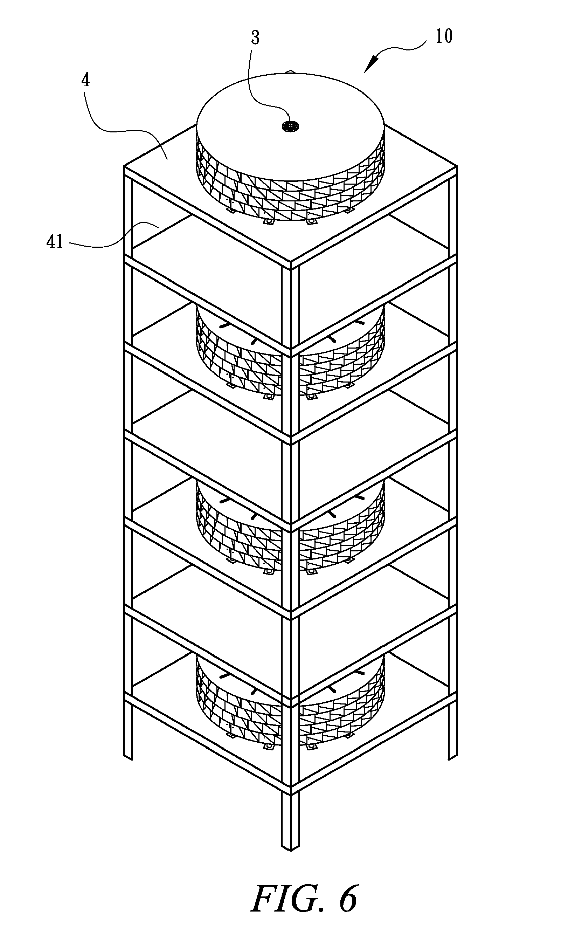

Now, please refer to Fig. 6. Several sets (with each set comprising several of the devices 10) may be fitted to a multiple-story tower 4, with each story holding a set of the devices or being used for a generator or for maintenance/repair. Moreover, because these devices 10 can optimize the harnessing of the wind power, no wind intercepting or guiding portions or designs need to be provided on the tower 4.

In conclusion, the omni-directional wind power harnessing device of the present invention has the following advantages:
1. The device of the present invention can harness the wind coming from any direction and may be used to reach the goal of high efficiency in the conversion from wind power to electricity.
2. In use, the vanes of the device of the present invention do not need to be adjusted to face the direction of wind. In addition, the vanes are fixed. Therefore, the device is structurally simple, more durable, less costly and not subject to the damages afflicted by wind.
3. Moreover, the device of the present invention may still be in operation when the wind momentarily dwindles or stops.
4. Several sets (with each set comprising several of the devices) may be fitted to a multiple-story tower with each story holding a set of the devices. Such a multiple-story tower is structurally simple and easy to fabricate.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. An omni-directional wind power harnessing device, comprising:
a platform, having a plurality of channeling ducts, which are circumferentially provided around the platform, so that wind coming from any direction may be channeled into the platform;
a rotary mechanism, disposed in the inner side of the platform and having a plurality of vanes, onto which wind may exert a push, and wherein a plurality of wind intercepting pieces are provided on each vane so that the wind may be concentrated to generate a stronger push; and
an output shaft, centrally disposed inside the rotary mechanism and able to be rotated by the rotary mechanism.

2. The omni-directional wind power harnessing device as in claim 1, wherein the platform is circumferentially provided around the periphery of the rotary mechanism and each of the channeling ducts is tilted to match the tilted angle of the corresponding vane.

3. The omni-directional wind power harnessing device as in claim 1, wherein the number of the channeling ducts is adjusted to optimize the wind harnessing efficiency.

4. The omni-directional wind power harnessing device as in claim 1, wherein each of the vanes has an arc shape and the vanes are circumferentially provided around the rotary mechanism with a tilted angle so as to harness the wind power.

5. The omni-directional wind power harnessing device as in claim 1, wherein a wind outlet portion is provided between each of the vanes and the corresponding channeling duct to let out the excessive or undesirable wind so that said excessive or undesirable windcan not enter the rotary mechanism.

6. The omni-directional wind power harnessing device as in claim 1, wherein a pressure enhancement region is provided at an inner portion of the rotary mechanism and after the main wind leaves the vanes, it enters the pressure enhancement region and is then concentrated to generate another push on the vanes.

7. The omni-directional wind power harnessing device as in claim 1, wherein because the wind power dwindles as it advances inwards along the vanes of the rotary mechanism, the wind intercepting pieces have a tapering length from the outside to the inside, with the innermost wind intercepting piece having the smallest height, so as to generate a smaller amount of interception as the wind power dwindles as it advances inwards along the vanes of the rotary mechanism and the wind may thus be concentrated to generate another wind pressure to cause the vanes to rotate.

8. The omni-directional wind power harnessing device as in claim 1, wherein each of the wind intercepting pieces has an increased or a reduced weight by an increase or reduction in its size or by the use of a different material to act as a flywheel to increase the rotational inertia of the rotary mechanism.

9. The omni-directional wind power harnessing device as in claim 1, wherein several of the wind power harnessing devices of the present invention are stacked up together with an angle between each neighboring pair of these four devices to form a set to optimize the wind power harnessing efficiency.

10. The omni-directional wind power harnessing device as in claim 1, wherein several sets, with each set comprising several of the devices, are fitted to a multiple-story tower with each story holding a set of the device.
